# EUROPEAN PATENT SPECIFICATION

(11) **EP 3 567 265 B1**
(45) Date of publication and mention of the grant of the patent: **03.06.2020**
(21) Application number: 19172555.5
(22) Date of filing: 03.05.2019
(51) Int. Cl.: F16B 5/02, B60R 11/06

(54) **APPARATUS CONFIGURED TO BE INSTALLED IN A VEHICLE**
VORRICHTUNG ZUR BEFESTIGUNG IN EINEM KRAFTFAHRZEUG
APPAREIL CONÇU POUR ÊTRE INSTALLÉ DANS UN VÉHICULE À MOTEUR

(30) Priority: 09.05.2018 JP 2018090364
(43) Date of publication of application: 13.11.2019
(73) Proprietor: Alpine Electronics, Inc., Tokyo 145-8501 (JP)
(72) Inventor: YAMAZAKI, Makoto, Iwaki-city, Fukushima (JP); SHIGA, Ken, Iwaki-city, Fukushima (JP)
(74) Representative: Schmitt-Nilson Schraud Waibel Wohlfrom Patentanwälte Partnerschaft mbB

(56) References cited:
- EP-A1- 1 144 767
- JP-A- H0 518 016

## Description

The present disclosure relates to an apparatus configured to be installed in a vehicle and capable of absorbing an impact force acting on an apparatus main body by moving the apparatus main body with respect to a support member, and to a vehicle comprising such apparatus.

JP 2013-198330 A discloses a support structure for an equipment box in a vehicle.

In this support structure, a bracket having mounting holes protrudes integrally from a side of the equipment box, and bolts inserted in the mounting holes are fastened to the support member, and thus the equipment box is secured to the support member. The bracket has a thin part between the equipment box and the mounting holes so that, when more than a certain load is applied to the equipment box, the bracket is broken at the thin part.

JP 2002-50880 A discloses an impact absorption structure.

In this impact absorption structure, an internal apparatus is disposed between opposing chassis, the chassis have screw insertion holes, and the internal apparatus has screw holes. Screws inserting in the screw insertion holes are screwed in the screw holes, so that the internal apparatus is secured between the opposing chassis. Each chassis has backup holes next to the screw insertion holes and grooves for decreasing the distance between each screw insertion hole and each backup hole. Thus, when an impact exceeding the fastening force of the screws acts on the internal apparatus or the chassis, the screws deform the grooves to move to the backup holes so that the impact is absorbed.

The support structure disclosed in JP 2013-198330 A needs to process the thin part at the bracket, increasing the cost of processing the bracket. Furthermore, if more than a certain load acts to break the bracket at the thin part, the equipment box comes off the support member and falls into the vehicle compartment. This is not preferable in the viewpoint of safety.

The impact absorption structure disclosed in JP 2002-50880 A is a structure in which when an impact is applied, each screw slides with respect to the bracket into the backup hole. Therefore, if the fastening force of the screws is excessively high, the internal apparatus cannot move unless an excessive impact is applied, and in contrast, if the fastening force of the screws is excessively low, the internal apparatus moves with the force lower than expected. Thus, it is difficult to appropriately set the impact force to be absorbed.

An object of the present disclosure is to provide an apparatus configured to be installed in a vehicle and which is capable of absorbing an impact force acting on an apparatus main body and in which the impact force to be absorbed can be set to an optimum value in designing.

The invention relates to an apparatus configured to be installed in a vehicle and a vehicle comprising such apparatus according to the appended claims. Embodiments are disclosed in the dependent claims.

An apparatus configured to be installed in a vehicle according to an aspect of the present disclosure includes an impact absorbing portion that is part of an apparatus main body configured to be installed in a vehicle and a support member to which the impact absorbing portion is fixed. The apparatus is characterized in that an opposing fixing member, a fastening member that fastens the support member and the opposing fixing member together, and an opening in the impact absorbing portion in which the fastening member is inserted are provided. The support member and the opposing fixing member are fastened together by the fastening member, with the impact absorbing portion interposed between the support member and the opposing fixing member. A moving clearance is provided in an impact acting direction between the opening and the fastening member. A protrusion is provided on one of the opposing fixing member and the impact absorbing portion, and a recess is provided in another of the opposing fixing member and the impact absorbing portion, or a protrusion is provided on one of the support member and the impact absorbing portion, and a recess is provided in another of the support member and the impact absorbing portion. The protrusion and the recess are fitted to position the impact absorbing portion and the support member in the impact acting direction. The protrusion is configured to be separated when a shearing force in the impact acting direction acts on the protrusion.

The apparatus according to an embodiment is characterized in that the protrusion is provided on the opposing fixing member, and a shearing strength per unit cross-sectional area against a shearing force is smaller in the opposing fixing member than in the impact absorbing portion and the support member.

The apparatus according to an embodiment is characterized in that the protrusion is smaller in width in the impact acting direction than in length in a direction perpendicular to the impact acting direction, and the protrusion is configured to be separated by a shearing force directed in the width.

The apparatus according to an embodiment is characterized in that the moving clearance is provided between the opening and the fastening member in all directions in a plane perpendicular to an axis of the fastening member, and the protrusion is configured to be separated by a shearing force in any direction in the plane.

In an apparatus according to an embodiment of the present disclosure, an opposing fixing member and a support member are fastened to each other by a fastening member, with an impact absorbing portion interposed therebetween, and the opposing fixing member or the support member and the impact absorbing portion are positioned by fitting a protrusion and a recess. This allows high-accuracy positioning of the apparatus main body to the support member, preventing backlash and movement of the apparatus main body until a predetermined impact force acts.

If more than a predetermined impact force acts on the apparatus main body, the protrusion is separated by a shearing force to move the apparatus main body, thereby absorbing the impact. Appropriately setting the material and the cross-sectional area of the protrusion facilitates setting an impact force to be absorbed, that is, impact resistance, in designing by separating the protrusion.
Fig. 1 is a perspective view of an apparatus according to an embodiment of the present disclosure viewed from the front;
Fig. 2 is a perspective view of the apparatus according to an embodiment of the present disclosure viewed from the back;
Fig. 3 is an exploded perspective view of the major components of the apparatus according to an embodiment of the present disclosure viewed from the back;
Fig. 4A is an enlarged cross-sectional view of the apparatus in Fig. 2 taken along line IV-IV, illustrating a state before an impact acts;
Fig. 4B is an enlarged cross-sectional view of the apparatus taken along line IV-IV, illustrating a state after an impact acts;
Fig. 5 is a back view of an apparatus of a modification of the present disclosure;
Fig. 6 is an enlarged cross-sectional view of an apparatus of a modification, illustrating the same part as in Fig. 4A;
Fig. 7 is an enlarged cross-sectional view of an apparatus of a modification, illustrating the same part as in Fig. 4A; and
Fig. 8 is an enlarged cross-sectional view of an apparatus of a modification, illustrating the same part as in Fig. 4A.

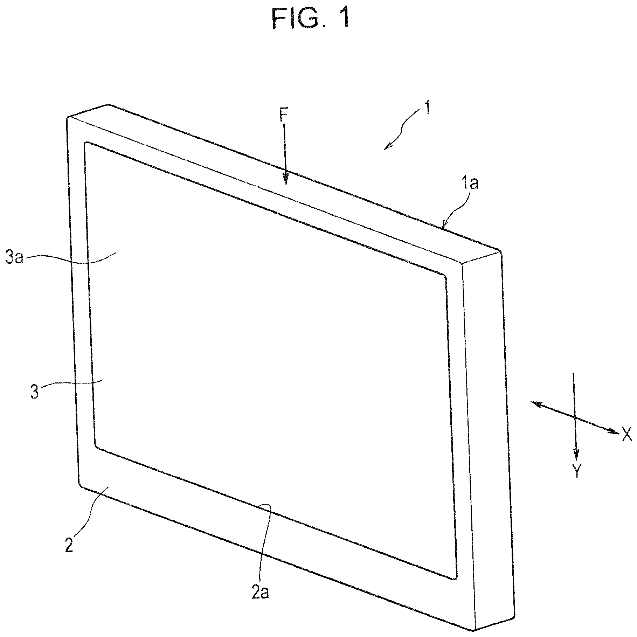

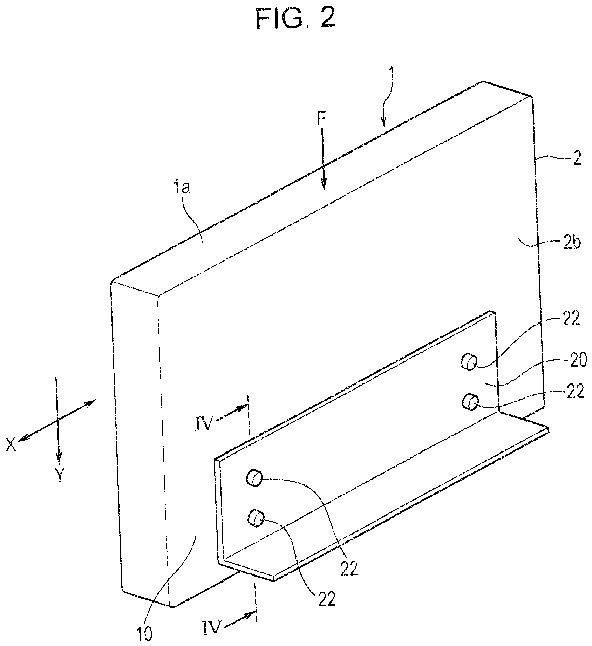

Figs. 1 and 2 illustrate an apparatus 1 configured to be installed in a vehicle according to an embodiment of the present disclosure in the following designated shortly "in-vehicle apparatus". Generally, the apparatus according to the invention is for example a display device configured to be installed in a vehicle.

The in-vehicle apparatus 1 generally includes an apparatus main body 1a configured to be installed in a vehicle. The apparatus main body 1a includes a chassis 2 and a display cell 3 in the chassis 2. Examples of the display cell 3 include a color liquid-crystal display cell and an electroluminescent display cell. A display screen 3a of the display cell 3 is exposed from an opening 2a of the chassis 2 facing the vehicle compartment. As illustrated in Fig. 2, a lower part of a back surface 2b of the chassis 2 opposite to the display screen 3a serves as an impact absorbing portion 10. The impact absorbing portion 10 is fixed to a support member 20. The support member 20 is a support bracket and is made of a metal plate. The support member 20 is fixed to the inside or the front surface of a dashboard of an instrument panel at the front of the vehicle compartment. The display screen 3a faces the vehicle interior. Alternatively, the support member 20 may be mounted on a movable table of a moving mechanism that moves up and down or back and forth from the dashboard or the instrument panel.

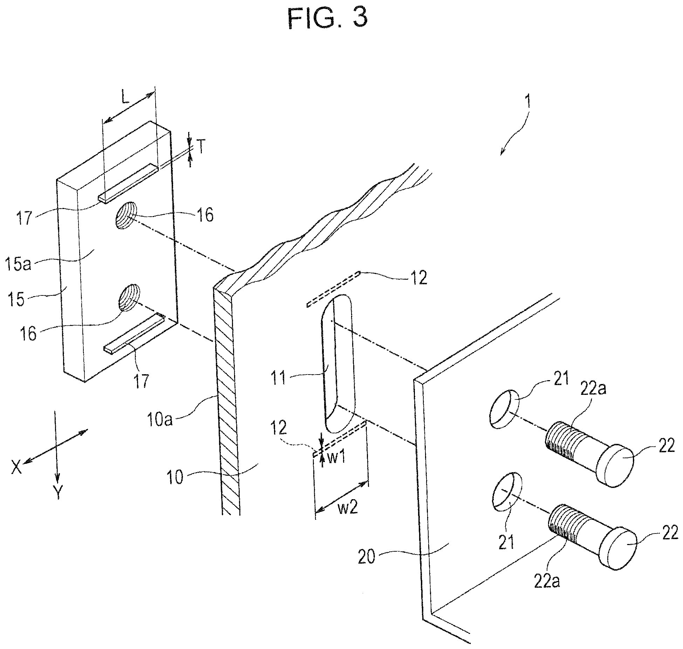

Fig. 3 illustrates the structure of the impact absorbing portion 10. The impact absorbing portion 10 is part of the back surface 2b of the chassis 2 constituting the apparatus main body 1a. Alternatively, the impact absorbing portion 10 may be separate from the apparatus main body 1a and may be fixed to the chassis 2 by screwing or the like. An impact acting direction Y is assumed to be downward in Figs. 1 and 2. The in-vehicle apparatus 1 according to the embodiment illustrated in Figs. 1 and 2 is configured, if an impact force F greater than a predetermined value is applied between the impact absorbing portion 10 and the support member 20 in a downward impact acting direction Y, to absorb and reduce the impact force F. The impact acting direction Y assumed is not limited to the downward direction and may be any direction depending on the placement position of the in-vehicle apparatus 1 in the vehicle component or the kind of the in-vehicle apparatus 1. The relative position and the orientation of the impact absorbing portion 10 and the support member 20 are set according to the assumed impact acting direction Y.

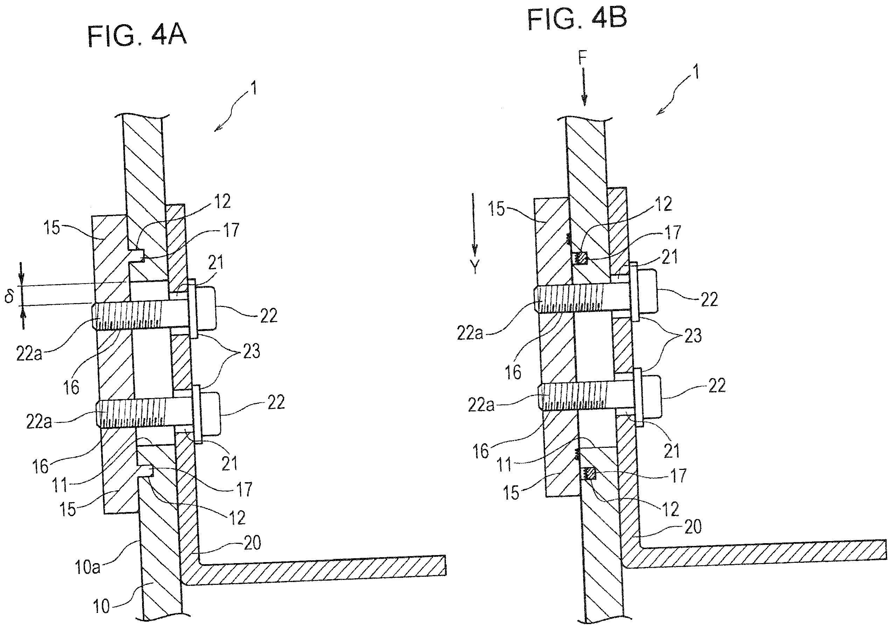

As illustrated in Fig. 3, the impact absorbing portion 10 has an opening 11. The opening 11 is a long hole whose length extends in the impact acting direction Y. A pair of recesses 12 are provided in an inner surface 10a of the impact absorbing portion 10 facing inward of the chassis 2. As illustrated in Fig. 4A, the recesses 12a are formed at a predetermined depth from the inner surface 10a. The pair of recesses 12 are positioned above and below the opening 11, with a space therebetween in the impact acting direction Y. Each recess 12 is small in width W1 in the impact acting direction Y and is sufficiently larger in width W2 in the X-direction perpendicular to the impact acting direction Y than the width W1.

As illustrated in Fig. 3, the chassis 2 has therein an opposing fixing member 15 that is in contact with the inner surface 10a of the impact absorbing portion 10 and that opposes the support member 20, with the impact absorbing portion 10 therebetween. The opposing fixing member 15 has a pair of internal thread holes. The internal thread holes 16 are disposed, with a certain distance therebetween in the impact acting direction Y. The opposing fixing member 15 has a pair of protrusions 17 protruding integrally from an opposing surface 15a opposing the impact absorbing portion 10. The upper protrusion 17 is provided above the upper internal thread hole 16, and the lower protrusion 17 is provided below the lower internal thread hole 16. Thus, the pair of protrusions 17 are spaced apart from each other in the impact acting direction Y.

Each protrusion 17 is small in thickness T in the impact acting direction Y and is sufficiently larger in length L in the X-direction perpendicular to the impact acting direction Y than the thickness T. The thickness T and the length L of the protrusions 17 are respectively substantially equal to the width W1 and the width W2 of the recesses 12. As illustrated in Fig. 4A, when the protrusions 17 are fitted in the recesses 12 into the fitted state, the opposing fixing member 15 and the impact absorbing portion 10 are positioned without relatively moving in the impact acting direction Y and the X-direction perpendicular to the impact acting direction Y.

The opposing fixing member 15 is made of an alloy, such as an aluminum alloy or a zinc alloy. The impact absorbing portion 10 and the support member 20 are made of iron or an allow. It is assumed that protrusions with the same size as the protrusions 17 are formed on the opposing fixing member 15, the impact absorbing portion 10, or the support member 20. The materials of the opposing fixing member 15, the impact absorbing portion 10, and the support member 20 may be selected so that the break strength against a shearing force in the direction of the thickness T of each protrusion is preferably smaller in the opposing fixing member 15 than in the impact absorbing portion 10 and the support member 20. In other words, it is preferable that the break strength of the opposing fixing member 15 per unit cross-sectional area against the shearing force is smaller than the break strength of the impact absorbing portion 10 and the support member 20.

As illustrated in Fig. 3, the support member 20 has a pair of fixing holes 21 spaced in the impact acting direction Y. Fastening members 22 are inserted in the corresponding fixing holes 21. The fastening members 22 are fixing screws or fixing bolts. In Figs. 4A and 4B, a washer 23 is disposed between the head of the fastening member 22 and the support member 20 but is not illustrated in Fig. 3. The fastening member 22 may be constituted by a fixing bolt and a nut or may be a press-fit pin or a lock pin to be fitted in the opposing fixing member 15.

Fig. 4A illustrates a cross-section structure in which the impact absorbing portion 10, the support member 20, and the opposing fixing member 15 are combined. The opposing fixing member 15 is disposed on the inner surface 10a of the impact absorbing portion 10, and the protrusions 17 are fitted in the corresponding recesses 12. The fastening members 22 are inserted in the fixing holes 21, with the back surface 2b of the chassis 2 in contact with the support member 20, pass through the opening 11 of the impact absorbing portion 10, and the external threads 22a of the fastening members 22 are screwed in the internal thread holes 16 of the opposing fixing member 15. The protrusions 17 and the recesses 12 are fitted, so that the opposing fixing member 15 is positioned and fixed to the impact absorbing portion 10 in the impact acting direction Y and the X-direction perpendicular to the impact acting direction Y. Since the opposing fixing member 15 and the support member 20 are fixed to each other with the fastening members 22, the impact absorbing portion 10, which is part of the apparatus main body 1a, and the support member 20 are also positioned and fixed in the impact acting direction Y and the X-direction. A moving clearance δ is provided in the impact acting direction Y between the opening 11 and the fastening member 22, with the impact absorbing portion 10, the support member 20, and the opposing fixing member 15 combined.

When a force in the impact acting direction Y is applied to the in-vehicle apparatus 1 assembled as in Fig. 4A, a shearing force in the Y-direction acts on the bases of the protrusions 17. If the impact force F in the impact acting direction Y exceeds a predetermined value, the boundary portion between the opposing fixing member 15 and the protrusions 17 is sheared, so that the apparatus main body 1a including the impact absorbing portion 10 moves in the Y-direction by the moving clearance δ, as illustrated in Fig. 4B. This movement absorbs and reduces the impact force F, ensuring safety in the vehicle compartment.

In the in-vehicle apparatus 1, the chassis 2 and the support member 20 are positioned and fixed by the fitting of the protrusions 17 and the recesses 12. This ensures prevention of the backlash of the apparatus main body 1a with respect to the support member 20 until a predetermined impact force F acts on the chassis 2. The impact force F applied when the chassis 2 moves in the impact acting direction Y to the support member 20 to absorb the impact force F, as illustrated in Fig. 4B, mainly depends on the material of the opposing fixing member 15 and the size (the cross-sectional area) of the protrusions 17. This facilitates appropriately setting the magnitude of the impact force F, that is, impact load resistance, in designing when an impact absorbing operation as illustrated in Fig. 4B is performed.

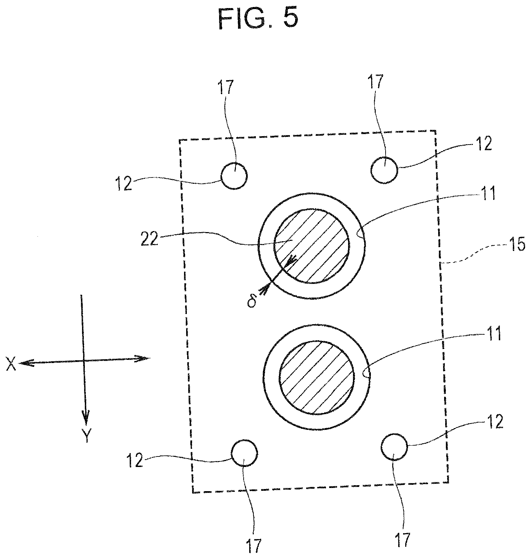

Fig. 5 is a back view of an in-vehicle apparatus 1 according to a modification of the present disclosure. In Fig. 5, components having the same functions as those of the embodiment illustrated in Figs. 1 to 4B are denoted by the same reference signs. In Fig. 5, the fastening members 22 are illustrated in cross-sectional view, and the support member 20 is omitted.

In the modification in Fig. 5, the moving clearance δ is set between each of openings 11 formed in the impact absorbing portion 10 and each fastening member 22 in all directions in a plane (a X-Y plane) perpendicular to the axis of the fastening member 22. Protrusions 17 formed on the opposing fixing member 15 and recesses 12 formed in the impact absorbing portion 10 are true circles, so that the shearing strength of the protrusions 17 against the shearing force along the X-Y plane is the same in all directions in the X-Y plane. In the modification illustrated in Fig. 5, even if an impact force F equal to or greater than a predetermined value is applied to the chassis 2 in any direction in the X-Y plane, a sufficient impact force absorbing effect can be obtained by separating the protrusions 17 by shear breaking. Even if the protrusions 17 and the recesses 12 are square in cross section, the impact force absorbing function in all directions in the X-Y plane can be provided.

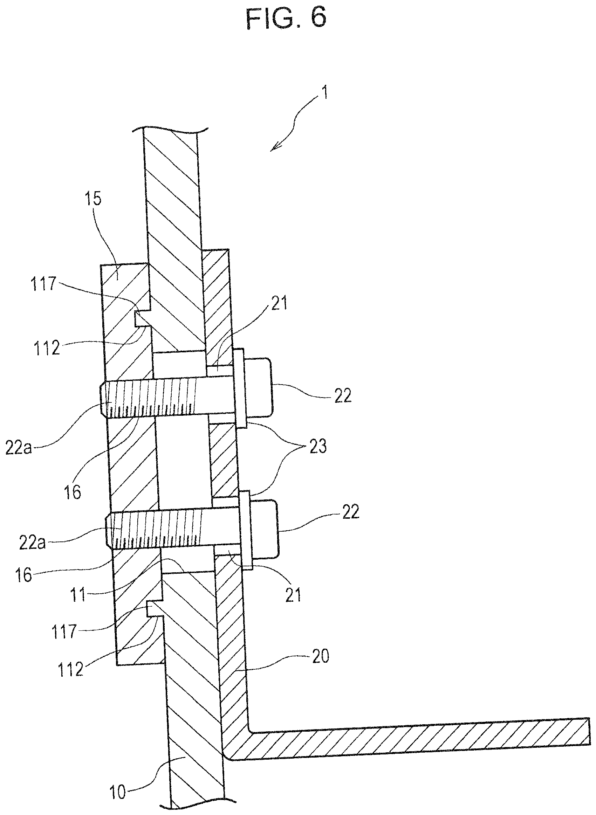

Figs. 6 to 8 illustrate the major parts of in-vehicle apparatuses 1 of modifications.

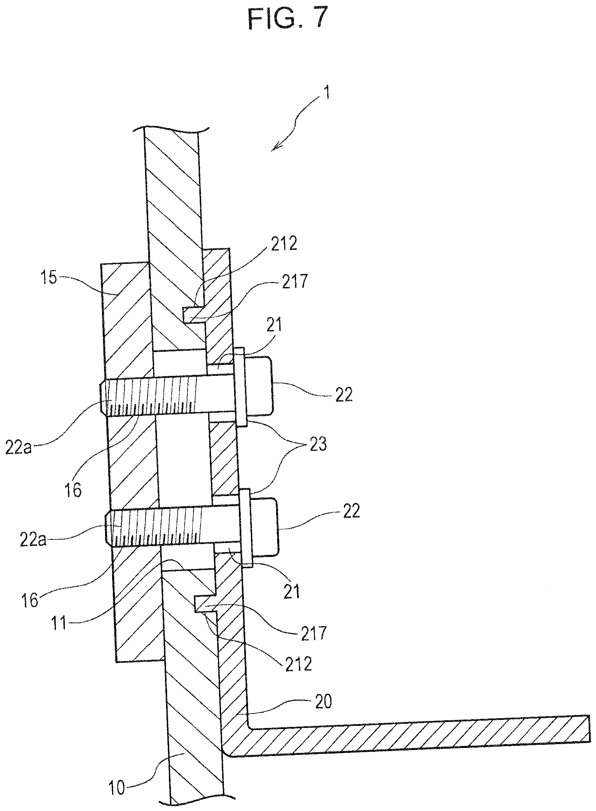

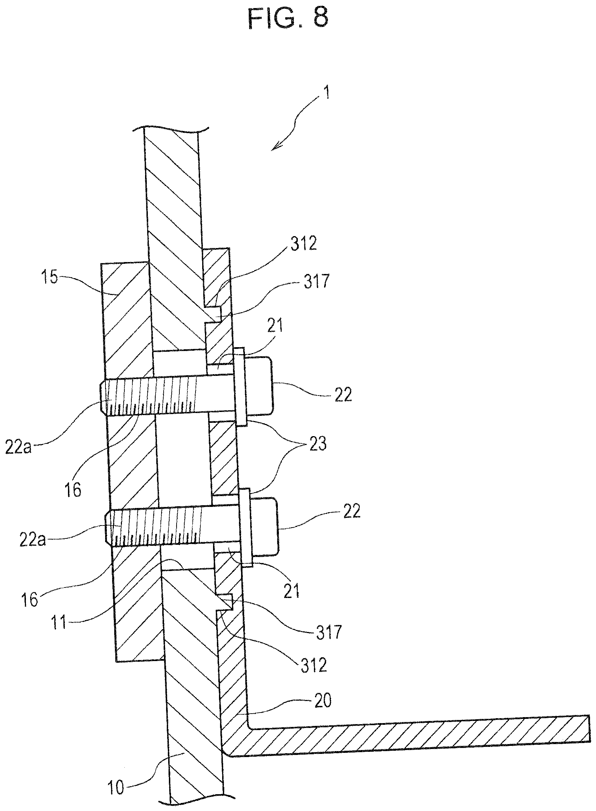

In the in-vehicle apparatus 1 illustrated in Fig. 6, protrusions 117 protrude from the inner surface 10a of the impact absorbing portion 10, and recesses 112 are formed in the opposing surface 15a of the opposing fixing member 15. The protrusions 117 and the recesses 112 are fitted to each other. In the in-vehicle apparatus 1 illustrated in Fig. 7, protrusions 217 integrally protrude from the support member 20, and recesses 212 are formed in the impact absorbing portion 10. The protrusions 217 and the recesses 212 are fitted to each other. In the in-vehicle apparatus 1 illustrated in Fig. 8, protrusions 317 integrally protrude from the impact absorbing portion 10, and recesses 312 are formed in the support member 20. The protrusions 317 and the recesses 312 are fitted to each other.

In any modifications, if an impact force equal to or greater than a predetermined value acts on the chassis 2, the protrusions are broken by the shearing force to separate from the impact absorbing portion 10 or the support member 20.

## Claims

1. An apparatus (1) configured to be installed in a vehicle comprising:
an impact absorbing portion (10) that is part of an apparatus main body (1a); and
a support member (20) to which the impact absorbing portion (10) is fixed,
wherein the apparatus (1) comprises:
an opposing fixing member (15), a fastening member (22) that fastens the support member (20) and the opposing fixing member (15) together, and an opening (11) in the impact absorbing portion (10) in which the fastening member (22) is inserted;
**characterized in that** the support member (20) and the opposing fixing member (15) are fastened together by the fastening member (22), with the impact absorbing portion (10) disposed between the support member (20) and the opposing fixing member (15);
a moving clearance (δ) provided in an impact acting direction between the opening (11) and the fastening member (22) ;
a protrusion (17, 117, 217, 317) provided on one of the opposing fixing member (15) and the impact absorbing portion (10), and a recess (12, 112, 212, 312) provided in another of the opposing fixing member (15) and the impact absorbing portion (10), or a protrusion (17, 117, 217, 317) provided on one of the support member (20) and the impact absorbing portion (10), and a recess (12, 112, 212, 312) provided in another of the support member (20) and the impact absorbing portion (10);
the protrusion (17, 117, 217, 317) and the recess (12, 112, 212, 312) are configured to be fitted to position the impact absorbing portion (10) and the support member (20) in the impact acting direction; and
the protrusion (17, 117, 217, 317) is configured to be separated when a shearing force in the impact acting direction acts on the protrusion (17, 117, 217, 317).

2. The apparatus (1) according to Claim 1, **characterized in that**:
the protrusion (17) is provided on the opposing fixing member (15); and
a shearing strength per unit cross-sectional area against a shearing force is smaller in the opposing fixing member (15) than in the impact absorbing portion (10) and the support member (20).

3. The apparatus (1) according to Claim 1 or 2, **characterized in that**:
the protrusion (17) is smaller in width (W1) in the impact acting direction than in length (W2) in a direction perpendicular to the impact acting direction; and
the protrusion (17) is configured to be separated by a shearing force directed in the width (W1).

4. The apparatus (1) according to one of Claims 1 to 3, **characterized in that**:
the moving clearance (δ) is provided between the opening (11) and the fastening member (22) in all directions in a plane perpendicular to an axis of the fastening member (22); and
the protrusion (17) is configured to be separated by a shearing force in any direction in the plane.

5. A vehicle comprising the apparatus according to one of the preceding claims.

## Patentansprüche

1. Vorrichtung (1), die zur Montage in einem Fahrzeug ausgebildet ist, aufweisend:
einen stoßabsorbierenden Bereich (10), der Teil eines Vorrichtungshauptkörpers (1a) ist; und
ein Abstützelement (20), an dem der stoßabsorbierende Bereich (10) festgelegt ist,
wobei die Vorrichtung (1) aufweist:
ein gegenüberliegendes Festlegeelement (15), ein Befestigungselement (22), das das Abstützelement (20) und das gegenüberliegende Festlegeelement (15) aneinander befestigt, und eine Öffnung (11) in dem stoßabsorbierenden Bereich (10), in die das Befestigungselement (22) eingesetzt ist;
**dadurch gekennzeichnet,**
**dass** das Abstützelement (20) und das gegenüberliegende Festlegeelement (15) durch das Befestigungselement (22) aneinander befestigt sind, wobei der stoßabsorbierende Bereich (10) zwischen dem Abstützelement (20) und dem gegenüberliegenden Festlegeelement (15) angeordnet ist;
**dass** ein Bewegungsfreiraum (δ) in einer Aufprallwirkungsrichtung zwischen der Öffnung (11) und dem Befestigungselement (22) vorgesehen ist;
**dass** ein Vorsprung (17, 117, 217, 317) an dem einen von dem gegenüberliegenden Festlegeelement (15) und dem stoßabsorbierenden Bereich (10) vorgesehen ist und eine Vertiefung (12, 112, 212, 312) in dem anderen von dem gegenüberliegenden Festlegeelement (15) und dem stoßabsorbierenden Bereich (10) vorgesehen ist, oder ein Vorsprung (17, 117, 217, 317) an dem einen von dem Abstützelement (20) und dem stoßabsorbierenden Bereich (10) vorgesehen ist und eine Vertiefung (12, 112, 212, 312) in dem anderen von dem Abstützelement (20) und dem stoßabsorbierenden Bereich (10) vorgesehen ist;
**dass** der Vorsprung (17, 117, 217, 317) und die Vertiefung (12, 112, 212, 312) derart ausgebildet sind, dass sie zur Positionierung des stoßabsorbierenden Bereichs (10) und des Abstützelements (20) in der Aufprallwirkungsrichtung passend ausgebildet sind; und
**dass** der Vorsprung (17, 117, 217, 317) dazu ausgebildet ist, separiert zu werden, wenn eine Scherkraft in der Aufprallwirkungsrichtung auf den Vorsprung (17, 117, 217, 317) wirkt.

2. Vorrichtung (1) nach Anspruch 1,
**dadurch gekennzeichnet,**
**dass** der Vorsprung (17) an dem gegenüberliegenden Festlegeelement (15) vorgesehen ist; und
**dass** eine Scherfestigkeit pro Querschnittsflächeneinheit gegenüber einer Scherkraft in dem gegenüberliegenden Festlegeelement (15) geringer ist als in dem stoßabsorbierenden Bereich (10) und dem Abstützelement (20).

3. Vorrichtung (1) nach Anspruch 1 oder 2,
**dadurch gekennzeichnet,**
**dass** der Vorsprung (17) in der Aufprallwirkungsrichtung eine geringere Breite (W1) als eine Länge (W2) in einer Richtung rechtwinklig zu der Aufprallwirkungsrichtung aufweist; und
**dass** der Vorsprung (17) dazu ausgebildet ist, durch eine in die Breite (W1) gerichtete Scherkraft separiert zu werden.

4. Vorrichtung (1) nach einem der Ansprüche 1 bis 3,
**dadurch gekennzeichnet,**
**dass** der Bewegungsfreiraum (δ) zwischen der Öffnung (11) und dem Befestigungselement (22) in allen Richtungen in einer Ebene rechtwinklig zu einer Achse des Befestigungselements (22) vorgesehen ist; und
**dass** der Vorsprung (17) dazu ausgebildet ist, durch eine Scherkraft in einer beliebigen Richtung in der Ebene separiert zu werden.

5. Fahrzeug, das die Vorrichtung nach einem der vorhergehenden Ansprüche aufweist.

## Revendications

1. Appareil (1) configuré pour son montage dans un véhicule, comprenant :
une portion absorbant les chocs (10) qui fait partie d'un corps principal (la) de l'appareil ; et
un élément (20) faisant office de support contre lequel est serrée la portion absorbant les chocs (10) ;
l'appareil (1) comprenant :
un élément de serrage opposé (15), un élément de fixation (22) qui fixe l'un à l'autre l'élément (20) faisant office de support et l'élément de serrage opposé (15), et une ouverture (11) pratiquée dans la portion absorbant les chocs (10), dans laquelle est inséré l'élément de fixation (22) ;
**caractérisé en ce que**
l'élément (20) faisant office de support et l'élément de serrage opposé (15) sont fixés l'un à l'autre par l'intermédiaire de l'élément de fixation (22), la portion absorbant les chocs (10) étant disposée entre l'élément (20) faisant office de support et l'élément de serrage opposé (15) ;
un espace libre pour le déplacement (δ) est prévu dans une direction dans laquelle s'exercent les chocs, entre l'ouverture (11) et l'élément de fixation (22) ;
une protrusion (17, 117, 217, 317) est prévue sur un élément choisi parmi l'élément de fixation opposé (15) et la portion absorbant les chocs (10), et un évidement (12, 112, 212, 312) est prévu dans l'autre élément choisi parmi l'élément de fixation opposé (15) et la portion absorbant les chocs (10), ou bien une protrusion (17, 117, 217, 317) est prévue sur un élément choisi parmi l'élément (20) faisant office de support et la portion absorbant les chocs (10), et un évidement (12, 112, 212, 312) est prévu dans l'autre élément choisi parmi l'élément (20) faisant office de support et la portion absorbant les chocs (10) ;
la protrusion (17, 117, 217, 317) et l'évidement (12, 112, 212, 312) sont configurés pour représenter les éléments nécessaires pour le positionnement de la portion absorbant les chocs (10) et l'élément (20) faisant office de support dans la direction dans laquelle s'exercent les chocs ; et
la protrusion (17, 117, 217, 317) est configurée pour être séparée lorsqu'une force de cisaillement dans la direction dans laquelle s'exercent les chocs agit sur la protrusion (17, 117, 217, 317).

2. Appareil (1) selon la revendication 1, **caractérisé en ce que** :
la protrusion (17) est prévue sur l'élément de serrage opposé (15) ; et
une résistance au cisaillement par aire de section transversale unitaire par rapport à une force de cisaillement est inférieure dans l'élément de serrage opposé (15) que dans la portion absorbant les chocs (10) et dans l'élément (20) faisant office de support.

3. Appareil (1) selon la revendication 1 ou 2, **caractérisé en ce que** :
la protrusion (17) est inférieure en largeur (W1) dans la 55direction dans laquelle s'exercent les chocs qu'en longueur (W2) dans une direction perpendiculaire à la direction dans laquelle s'exercent les chocs ; et
la protrusion (17) est configurée pour être séparée par une force de cisaillement qui s'exerce dans la largeur (W1).

4. Appareil (1) selon l'une quelconque des revendications 1 à 3, **caractérisé en ce que** :
l'espace libre pour le déplacement (δ) est prévu entre l'ouverture (11) et l'élément de fixation (22) dans toutes les directions dans un plan perpendiculaire à un axe de l'élément de fixation (22) ; et
la protrusion (17) est configurée pour être séparée par une force de cisaillement qui s'exerce dans n'importe quelle direction dans le plan.

5. Véhicule comprenant l'appareil selon l'une quelconque 70des revendications précédentes.
